# FASCICULE DE BREVET EUROPEEN

(11) **EP 0 553 033 B1**
(45) Date de publication et mention de la délivrance du brevet: **20.03.1996**
(21) Numéro de dépôt: 93400158.7
(22) Date de dépôt: 22.01.1993
(51) Int. Cl.: G02B 23/16, G02B 23/12

(54) **Dispositif de fixation et de raccordement, notamment d'un ensemble intensificateur de lumière sur un générateur d'images d'un viseur de casque pilote**
Befestigungs- und Verbindungsteil, insbesondere für eine Lichtverstärkereinheit für eine Bilderzeugungsvorrichtung in einem Pilotenhelm
Adjustment and connection part, especially for a light amplification device for an image projection unit for a pilot helm

(30) Priorité: 24.01.1992 FR 9200784
(43) Date de publication de la demande: 28.07.1993
(73) Titulaire: SEXTANT AVIONIQUE, F-92360 Meudon-la-Forêt (FR)
(72) Inventeur: Corsan, Philippe, Cabinet BALLOT-SCHMIT, F-75116 Paris (FR); Jolly, Patrick, Cabinet BALLOT-SCHMIT, F-75116 Paris (FR); Farvacque, Olivier, Cabinet BALLOT-SCHMIT, F-75116 Paris (FR)
(74) Mandataire: Ballot, Paul Denis Jacques

(56) Documents cités:
- EP-A- 0 098 989
- EP-A- 0 280 452
- DE-A- 2 632 263
- US-A- 3 971 933
- US-A- 4 592 096
- US-A- 4 600 277
- US-A- 4 670 912
- US-A- 4 703 879

## Description

La présente invention concerne un dispositif de fixation d'un ensemble intensificateur de lumière amovible sur un imageur fixe d'un système viseur de casque de pilote d'aéronef.

Par exemple, il peut s'agir d'un casque pourvu d'un équipement optoélectronique, conçu pour l'aéronautique et, plus spécialement, pour les pilotes d'avion et d'hélicoptère.

L'équipement optoélectronique est communément dénommé viseur, et comprend un premier élément : l'imageur, constitué d'un générateur d'images et d'un dispositif optique associé pour le transport de l'image devant l'oeil, auquel est ajouté un second élément utilisé lors des missions nocturnes : l'intensificateur de lumière.

Dans ce domaine technique particulier, il est important que la fixation ou le raccordement de tout élément sur le casque puisse être effectué par le pilote, d'une seule main et en aveugle, de manière à ne pas perturber son attention sur le poste de pilotage en cours de mission.

La présente invention a pour premier but de réaliser un dispositif de fixation d'un ensemble intensificateur de lumière sur un imageur fixe permettant d'obtenir ce résultat.

Le second but de l'invention est de permettre, lors du démontage de l'ensemble intensificateur de lumière, la protection de l'imageur contre toutes actions nocives dues à des agents extérieurs, tels que poussières ou lumière parasite, et cela en provoquant sa fermeture de manière automatique, précisément au moment du démontage. Bien entendu, la réversibilité devra être autorisée de la même manière au moment du remontage de l'intensificateur de lumière.

La présente invention a pour but d'atteindre ces objectifs et concerne à cet effet un dispositif de fixation d'un ensemble intensificateur de lumière amovible sur un imageur fixe d'un système viseur de casque de pilote d'aéronef, caractérisé en ce qu'il comporte des moyens d'indexation et de verrouillage amovibles de l'ensemble intensificateur de lumière sur l'imageur fixe, agissant en combinaison avec des moyens de commande en ouverture et en fermeture d'un obturateur de lumière dudit imageur fixe, de manière que le verrouillage ou le déverrouillage de l'ensemble intensificateur provoque simultanément la commande en ouverture ou en fermeture de l'obturateur, et à rendre l'ensemble des opérations, réalisables d'une seule main et en aveugle.

L'invention sera mieux comprise et d'autres caractéristiques de celle-ci seront mises en évidence à l'aide de la description qui suit, en référence aux dessins schématiques annexés, illustrant, à titre d'exemple non limitatif, comment l'invention peut être réalisée et dans lesquels :
- la figure 1 est une vue en perspective d'un intensificateur de lumière monté sur un imageur de viseur de casque ;
- la figure 2 est une vue en perspective éclatée selon la figure 1 ;

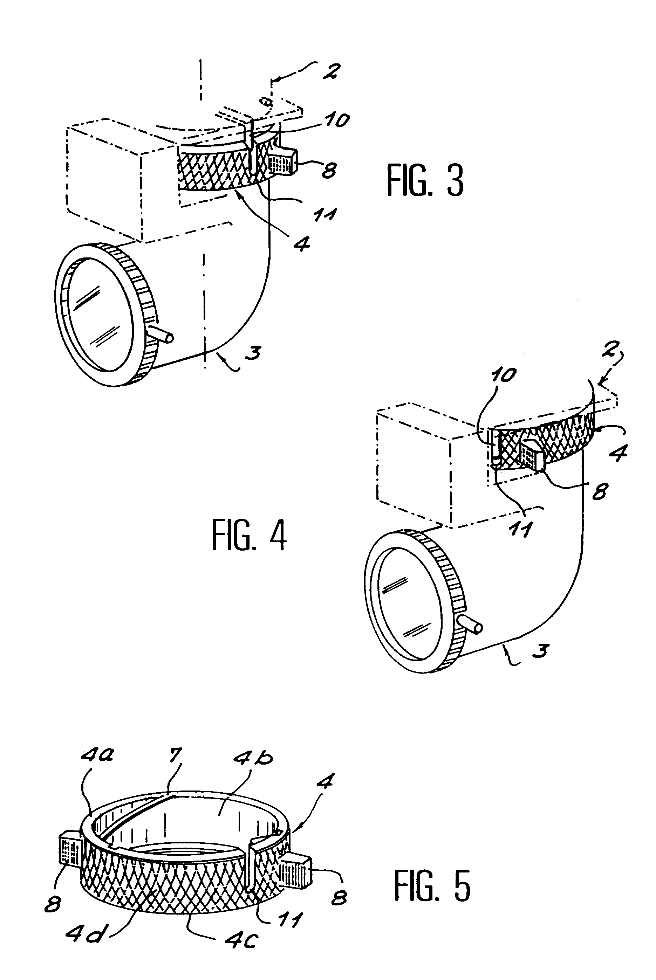

- les figures 3 et 4 sont des vues montrant respectivement l'indexation et le verrouillage d'un intensificateur de lumière sur un imageur, et
- la figure 5 est une vue en perspective d'une bague de verrouillage assurant la liaison entre l'intensificateur de lumière et l'imageur.

Un casque sur lequel est destiné à être monté un équipement optoélectronique ou viseur 1, est connu en soi et n'a pas été représenté.

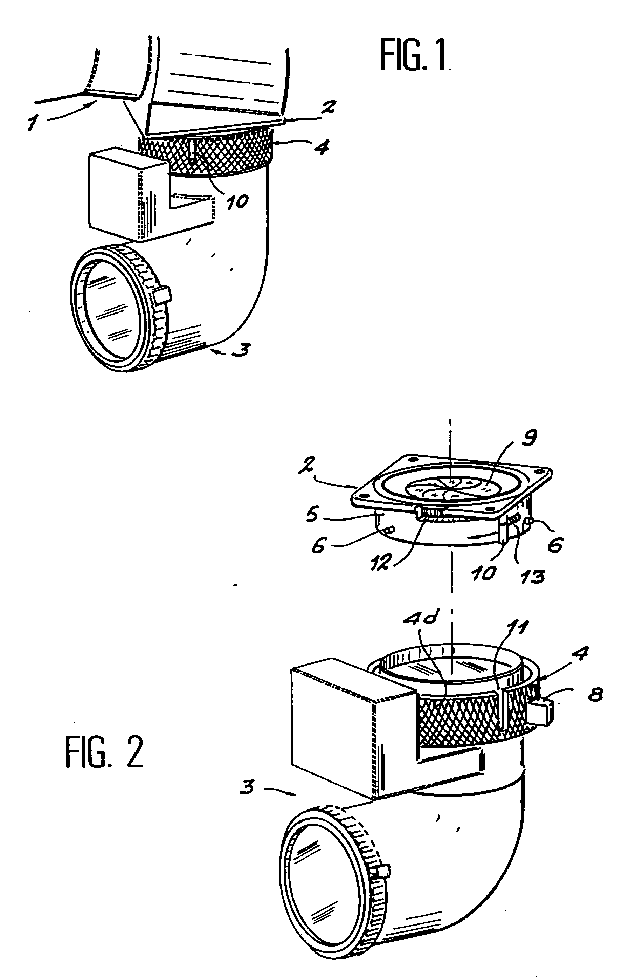

Comme représenté sur la figure 1, le viseur 1 comporte à sa partie inférieure un générateur fixe d'images, ou imageur 2, sur lequel est fixé par raccordement un ensemble intensififcateur de lumière 3 par l'intermédiaire d'un dispositif de raccordement et de fixation selon l'invention.

Ce dispositif comporte des moyens d'indexation et de verrouillage amovibles de l'ensemble intensificateur de lumière 3 sur l'imageur fixe 2, constitués par une bague 4 montée rotative à l'extrémité dudit intensificateur de lumière 3 qui est apte à coopérer avec un arbre 5 correspondant de l'imageur 2 par l'intermédiaire d'au moins un ergot 6 disposé radialement sur l'arbre 5 de l'imageur 2, coopérant en rotation avec une rainure interne 7 correspondante, prenant naissance sur la face d'extrémité 4a de la bague 4 et se développant dans son alésage 4b en direction de la face opposée 4c de ladite bague 4.

En l'occurence, les ergots 6 sont au nombre de trois, espacés les uns des autres d'un angle de 120° et uniformément répartis sur la périphérie dudit arbre 5 de l'imageur 2.

Bien entendu, un nombre différent d'ergots 6 répartis uniformément ou pas, peuvent être envisagés, comme par exemple pour obtenir le verrouillage après une rotation de seulement 60°.

Dans le présent exemple d'application, la rainure 7 ménagée dans l'alésage 4b de la bague 4 est hélicoïdale, de manière à assurer un verrouillage progressif de l'intensificateur 3 sur l'imageur 2.

Mais l'invention prévoit également que la rainure 7 ménagée dans l'alésage 4a de la bague 4 est constituée par un tronçon axial se prolongeant par un tronçon perpendiculaire au précédent, de manière à réaliser un verrouillage du type "baïonnette".

De manière à faciliter sa préhension et éviter tout glissement, la bague de verrouillage 4 est molletée sur sa face latérale externe 4d et comporte deux doigts de manoeuvre 8 diamétralement opposés et disposés radialement sur ladite face externe 4d de la bague 4.

Egalement selon l'invention, le dispositif comporte en outre des moyens de commande en ouverture ou fermeture de l'obturateur de lumière 9 de l'imageur fixe 2, qui sont constitués par un axe de commande axial 10 en liaison mécanique avec l'obturateur 9 et apte à coopérer au montage avec une rainure ouverte correspondante 11, ménagée axialement sur la bague rotative 4 de manière que cette dernière entraîne en rotation ledit axe de commande 10 de l'obturateur 9, provoquant conséquemment l'ouverture ou la fermeture de ce dernier.

Comme le montre la figure 2, l'axe de commande 10 est apte à se débattre rotativement entre deux butées définies par les extrémités d'une lumière 12, réalisées dans la paroi de l'arbre 5 de l'imageur 2.

Enfin, il est à noter que la commande en rotation de l'axe de commande 10 de l'obturateur 9 s'effectue, en ouverture, à l'encontre d'un ressort 13 de rappel en fermeture.

Ainsi les moyens d'indexation et de verrouillage sont aptes à rendre l'intensificateur de lumière 3 amovible par rapport à l'imageur fixe 2 et à agir en combinaison avec les moyens de commande en ouverture et en fermeture de l'obturateur de lumière 9 dudit imageur fixe 2.

De cette manière et selon le but recherché, le verrouillage ou le déverrouillage de l'ensemble intensificateur 3 provoque simultanément la commande en ouverture ou en fermeture de l'obturateur 9, de manière à rendre l'ensemble des opérations réalisables d'une seule main et en aveugle.

Le fonctionnement et la mise en oeuvre d'un tel dispositif sont les suivants :

Lorsque le pilote souhaite raccorder l'intensificateur de lumière 3 sur l'imageur 2, il présente ledit intensificateur d'une main en vue de l'indexer en aveugle par rapport à l'imageur 2 grâce d'une part, à la rainure 11 de la bague 4 cherchant à se positionner sur l'axe 10 de commande de l'obturateur 9, par une rotation lente de recherche, exercée sur la bague 4 par le pilote, et d'autre part, par les ergots 6 de l'imageur 2, aptes à s'engager pour y être guidés, dans les rainures hélicoïdales 7 de la bague 4, par rotation effective de celle-ci.

On comprend aisément que l'action de verrouillage effectuée ensuite par les ergots 6 dans les rainures hélicoïdales 7, assure simultanément l'ouverture de l'obturateur 9, car son axe de commande 10 se trouve alors en prise dans la rainure axiale ouverte 11 de la même bague 4 entraînée en rotation, et inversement.

## Revendications

1. Dispositif de fixation d'un ensemble intensificateur de lumière amovible sur un imageur fixe d'un système viseur de casque de pilote d'aéronef, caractérisé en ce qu'il comporte des moyens d'indexation et de verrouillage amovibles de l'ensemble intensificateur de lumière (3) sur l'imageur fixe (2), agissant en combinaison avec des moyens de commande en ouverture et en fermeture d'un obturateur de lumière (9) dudit imageur fixe (2), de manière que le verrouillage ou le déverrouillage de l'ensemble intensificateur (3) provoque simultanément la commande en ouverture ou en fermeture de l'obturateur (9), et à rendre l'ensemble des opérations, réalisables d'une seule main et en aveugle.

2. Dispositif selon la revendication 1, caractérisé en ce que les moyens d'indexation et de verrouillage amovibles de l'ensembe intensificateur de lumière (3) sur l'imageur fixe (2) sont constitués par une bague (4) montée rotative à l'extrémité dudit intensificateur de lumière (3) qui est apte à coopérer avec un arbre (5) correspondant de l'imageur (2) par l'intermédiaire d'au moins un ergot (6) disposé radialement sur l'arbre (5) de l'imageur (2), coopérant en rotation avec une rainure interne (7) correspondante, prenant naissance sur la face d'extrémité (4a) de la bague (4) et se développant dans son alésage (4b) en direction de la face opposée 4c de ladite bague (4).

3. Dispositif selon la revendication 2 caractérisé en ce que la rainure (7) ménagée dans l'alésage (4b) de la bague (4) est hélicoïdale, de manière à assurer un verrouillage progressif de l'intensificateur (3) sur l'imageur (2).

4. Dispositif selon la revendication 2 caractérisé en ce que la rainure (7) ménagée dans l'alésage (4b) de la bague (4) est constituée par un tronçon axial se prolongeant par un tronçon perpendiculaire au précédent de manière à réaliser un verrouillage du type "baïonnette".

5. Dispositif selon l'une des revendications précédentes caractérisé en ce que les moyens de commande en ouverture et en fermeture de l'obturateur de lumière (9) de l'imageur fixe (2) qui sont constitués par un axe de commande axial (10) en liaison mécanique avec l'obturateur (9) et apte à coopérer au montage avec une rainure ouverte correspondante (11), ménagée axialement sur la bague rotative (4) de manière que cette dernière entraîne en rotation ledit axe de commande (10) de l'obturateur (9), provoquant conséquemment l'ouverture ou la fermeture de ce dernier.

6. Dispositif selon la revendication 5 caractérisé en ce que la commande en rotation de l'axe de commande (10) de l'obturateur (9) s'effectue, en ouverture, à l'encontre d'un ressort (13) de rappel en fermeture.

7. Dispositif selon l'une des revendications 2 à 5 caractérisé en ce que la bague de verrouillage et de commande de l'obturateur comporte au moins un doigt de manoeuvre radial disposé sur sa périphérie externe.

## Patentansprüche

1. Vorrichtung zur abnehmbaren Befestigung einer Lichtverstärkereinheit an einem feststehenden Bildgerät eines Sichtgerätes für einen Pilotenhelm, dadurch gekennzeichnet, daß sie eine Index- und Verriegelungsanordnung aufweist, die die Lichtverstärkereinheit (3) lösbar mit dem feststehenden Bildgerät (2) verbindet und dabei mit einer Steueranordnung zum Öffnen und Verschließen eines Lichtunterbrechers (9) im feststehenden Bildgerät (2) derart zusammenwirkt, daß die Verriegelung oder Entriegelung der Lichtverstärkereinheit (3) zugleich die Steuerung des Öffnens oder des Verschließens des Unterbrechers (9) bewirkt, wobei die Gesamtheit der Schritte mit einer Hand oder auch blind durchführbar sind.

2. Vorrichtung nach Anspruch 1, dadurch gekennzeichnet, daß die Index- und Verriegelungsanordnung, die die Lichtverstärkereinheit (3) lösbar mit dem feststehenden Bildgerät (2) verbindet, aus einem Ring (4) besteht, der drehbar am Ende des Lichtverstärkers (3) angeordnet ist und der mit einem entsprechenden Stutzen (5) des Bildgerätes (2) zusammenwirkt mittels wenigstens eines Zapfens (6), der radial am Stutzen (5) des Bildgerätes (2) angeordnet ist und durch Drehung mit einer entsprechenden Innennut (7) zusammenwirkt, die von der Endfläche (4a) des Ringes ausgeht und sich in Richtung der gegenüberliegenden Fläche (4c) des Ringes (4) in der Bohrung (4b) erstreckt.

3. Vorrichtung nach Anspruch 2, dadurch gekennzeichnet, daß die in der Bohrung (4b) des Ringes (4) vorgesehenen Nut (7) schraubenförmig derart ausgestaltet ist, daß eine zunehmende Verriegelung des Verstärkers (3) mit dem Bildgerät (2) gewährleistet wird.

4. Vorrichtung nach Anspruch 2, dadurch gekennzeichnet, daß die in der Bohrung (4b) des Ringes (4) vorgesehene Nut (7) aus einem axialen Nutabschnitt besteht, der durch einen senkrecht zu diesem verlaufenden Nutabschnitt verlängert wird, so daß eine Bajonett-Verriegelung besteht.

5. Vorrichtung nach einem der vorhergehenden Ansprüche, dadurch gekennzeichnet, daß die Steueranordnung zum Öffnen und Verschließen des Lichtunterbrechers (9) des feststehenden Bildgerätes (2) aus einer axialen Steuerachse (10) besteht, in mechanischer Verbindung mit dem Unterbrecher (9), wobei sie während der Montage mit einer entsprechenden offenen Nut (11) zusammenwirkt, die in Axialrichtung am drehbaren Ring (4) derart vorgesehen ist, daß letzterer die Steuerachse (10) des Unterbrechers (9) in Drehungen versetzt und dadurch das Öffnen oder das Verschließen des letzteren bewirkt.

6. Vorrichtung nach Anspruch 5, dadurch gekennzeichnet, daß die Drehsteuerung der Steuerachse (10) des Unterbrechers (9) in Richtung des Öffnens gegen die Wirkung einer Rückholfeder (13) in Schließrichtung erfolgt.

7. Vorrichtung nach einem der Ansprüche 2 bis 5, dadurch gekennzeichnet, daß der Ring zur Verriegelung und zur Steuerung des Unterbrechers wenigstens einen an seinem Außenumfang vorgesehenen radialen Betätigungsfinger aufweist.

## Claims

1. Device for fixing a movable light intensifier unit onto a fixed imaging device of a visor system in an aircraft pilot's helmet, characterised in that it has movable means for indexing and locking the light intensifier unit (3) on the fixed imaging device (2), operating in conjunction with means to control the opening and closing of a light shutter (9) of the said fixed imaging device (2), so that the locking or unlocking of the intensifier unit (3) simultaneously controls the opening or closing of the shutter (9), making handling operations possible with one hand or blind.

2. Device as claimed in claim 1, characterised in that the movable indexing and locking means of the light intensifier unit (3) on the fixed imaging device (2) comprise a ring (4) rotatably mounted on the end of the said light intensifier (3), which is designed to cooperate with a corresponding shaft (5) of the imaging device (2) by means of at least one stud (6) arranged radially on the shaft (5) of the imaging device (2), cooperating in rotation with a corresponding internal groove (7), starting on the end face (4a) of the ring (4) and extending inside its bore (4b) in the direction of the opposite face 4c of the said ring (4).

3. Device as claimed in claim 2, characterised in that the groove (7) arranged in the bore (4b) of the ring (4) is helical, so as to enable the intensifier (3) to be screwed down gradually onto the imaging device (2).

4. Device as claimed in claim 2, characterised in that the groove (7) arranged inside the bore (4b) of the ring (4) consists of an axial portion extending into a portion perpendicular thereto so as to form a bayonet type of fitting.

5. Device as claimed in one of the previous claims, characterised in that the means for controlling the opening and closing of the light shutter (9) of the fixed imaging device (2) consist of an axial control pin (10) mechanically linked to the shutter (9) and designed to cooperate during assembly with a corresponding open groove (11) axially arranged on the rotatable ring (4) so as to push the control pin (10) of the said shutter (9) in rotation, thus causing the latter to open or close.

6. Device as claimed in claim 5, characterised in that, when rotated, the control pin (10) operates the shutter (9) on opening by moving against a spring (13) which returns to effect closure.

7. Device as claimed in one of claims 2 to 5, characterised in that the locking and shutter control ring has at least one operating finger arranged radially on its external periphery.
